# FASCICULE DE BREVET EUROPEEN

(11) **EP 3 602 758 B1**
(45) Date de publication et mention de la délivrance du brevet: **20.07.2022**
(21) Numéro de dépôt: 18718593.9
(22) Date de dépôt: 27.03.2018
(51) Int. Cl.: H02K 33/16, H02K 11/215, H02K 1/17, H02K 16/02

(54) **ACTIONNEUR LINEAIRE PRESENTANT DEUX MOBILES INDEPENDANTS ET UNE CONFIGURATION OPTIMISEE D'AIMANTS PERMANENTS**
LINEARES STELLGLIED MIT ZWEI UNABHÄNGIGEN BEWEGLICHEN MASSEN UND OPTIMIERTER KONFIGURATION VON PERMANENTMAGNETEN
LINEAR ACTUATOR WITH TWO INDEPENDENT MOBILE MASSES AND AN OPTIMIZED CONFIGURATION OF PERMANENT MAGNETS

(30) Priorité: 30.03.2017 FR 1752706
(43) Date de publication de la demande: 05.02.2020
(73) Titulaire: Moving Magnet Technologies, 25000 Besançon (FR)
(72) Inventeur: RIOS-QUESADA, Javier, 25000 Besançon (FR); DELBAERE, Michaël, 25720 Avanne (FR); THIBAUT, Pascal, 2608 Courtelary (CH); RIOU, Gaëtan, 25500 Morteau (FR)
(74) Mandataire: IP Trust
(86) Numéro de dépôt international: PCT/FR2018/050737
(87) Numéro de publication internationale: WO 2018/178557

(56) Documents cités:
- EP-A1- 3 492 958
- WO-A1-2015/004341
- WO-A1-2015/114261
- WO-A1-2016/156996
- DE-A1-102015 111 385

## Description

### DOMAINE TECHNIQUE DE L'INVENTION

L'invention se rapporte au domaine des actionneurs électromagnétiques présentant des organes (ou masses) mobiles en déplacement linéaire.

Plus particulièrement, l'invention se rapporte aux actionneurs ayant deux organes mobiles indépendants se déplaçant au voisinage l'un de l'autre.

### ETAT DE LA TECHNIQUE ANTERIEURE

Le document WO2015114261 présente un tel type d'actionneur où l'on retrouve deux organes mobiles indépendants entourés d'une pluralité de pôles aimantés et dont le but est de minimiser l'effort transverse s'appliquant sur les deux organes mobiles par un agencement astucieux des pôles aimantés.

Cependant, si cette solution permet de répondre partiellement au problème global de forces transverses, il ne permet pas toujours de répondre au problème de couple mécanique qui s'applique sur les organes mobiles et sur les éléments à déplacer, liés aux organes mobiles. En effet, même lorsque la force transverse est faible, par le jeu d'un bras de levier entre les organes mobiles et le nez de guidage, ce couple peut être suffisamment important pour introduire un frottement préjudiciable au déplacement linéaire des organes mobiles.

Par ailleurs, lorsque l'entraxe entre les organes mobiles est faible, relativement à la dimension globale de l'actionneur, il n'est plus possible de placer efficacement un aimant au centre de l'actionneur, entre les organes mobiles, afin à la fois de garantir un effort magnétique axial suffisant au déplacement des organes mobiles mais également de contrebalancer les efforts transverses qui s'appliquent sur les organes mobiles induits par les aimants latéraux.

De plus, le document WO2015114261 illustre soit l'utilisation d'aimants de forme cylindrique circulaire autour des organes mobiles, soit l'utilisation d'aimants de forme parallélépipédique. Dans le premier cas, un faible entraxe entre organes mobiles impose des aimants à faible épaisseur, donc peu efficaces. Dans le second cas, par le jeu d'une surépaisseur d'aimant au milieu de la structure, les organes mobiles doivent être éloignés de l'aimant central afin de garantir une force transverse faible (comme illustré en figure 13 de WO2015114261), mais cela est au détriment de la force utile axiale.

Document DE102015111385A1 divulgue un actionneur électromagnétique pour une vanne dans un moteur à combustion interne ayant deux masses mobiles indépendantes.

WO2016156996A1 divulgue un actionneur pour un appareil photo ayant deux modules d'objectifs indépendants.

### EXPOSE DE L'INVENTION

La présente invention vise à pallier les inconvénients de l'état de la technique en permettant non seulement de conserver une force transversale de faible amplitude comparée à la force axiale utile, mais aussi de minimiser le couple induit s'appliquant sur les organes mobiles.

Un des objets de l'invention est ainsi de permettre l'utilisation d'aimants parallélépipédiques toujours en conservant une force transverse de faible amplitude comparée à la force axiale utile, et un faible couple s'appliquant sur les organes mobiles.

En effet, l'utilisation d'aimants parallélépipédiques, frittés par exemple, est une solution industrielle plus abordable que celle utilisant des aimants annulaires de même type, par une fabrication, une mise en forme et une aimantation facilitée.

Pour ce faire, la présente invention propose de répartir des pôles aimantés autour des organes mobiles avec un agencement particulier permettant d'assurer les avantages ci-dessus.

Plus particulièrement, l'invention propose un actionneur électromagnétique linéaire comportant un stator, au moins une bobine électrique et deux pôles statoriques ferromagnétiques situés, axialement, de part et d'autre de la bobine ainsi que deux masses mobiles indépendantes se déplaçant selon des axes parallèles entre lesdits pôles statoriques à l'intérieur de ladite bobine, chacune desdites masses mobiles étant formée d'un matériau ferromagnétique, lesdites masses mobiles étant entourées, chacune, par une enveloppe aimantée fixe constituée par au moins un aimant permanent, ladite enveloppe aimantée s'étendant sur un secteur tubulaire de moins de 360°, chacune des desdites enveloppes définissant une zone non-aimantée dirigée vers la zone non-aimantée de l'autre enveloppe, lesdites zones non aimantées étant symétriques par rapport au plan médian passant par lesdits axes parallèles.

Dans une première alternative lesdites enveloppes aimantées sont formées par des aimants de forme parallélépipédique.

Dans une autre alternative lesdites enveloppes aimantées sont formées par des aimants en forme de tuile cylindrique circulaire.

Avantageusement, lesdites masses mobiles définissent deux plans transverses parallèles entre eux, perpendiculaires audit plan médian et passant par le centre desdites masses mobiles et chaque enveloppe aimantée comprend des aimants intérieurs, situés entre lesdits deux plans transverses, et des aimants extérieurs, situés à l'extérieur desdits plans transverses.

Alternativement, lesdites enveloppes aimantées présentent, entre les plans transverses, des aimants de forme parallélépipédique et en dehors desdits plans transverses, des aimants en forme de tuile cylindrique circulaire.

Encore dans une autre alternative lesdites enveloppes aimantées présentent, entre les plans transverses, des aimants en forme de tuile cylindrique circulaire et en dehors desdits plans transverses, des aimants de forme parallélépipédique.

Avantageusement, pour des raisons économiques, lesdits aimants intérieurs et extérieurs peuvent être identiques.

Afin de conférer un équilibre des forces, ledit plan médian peut constituer un plan de symétrie pour lesdits aimants intérieurs et extérieurs.

Alternativement, afin d'améliorer la diminution du couple de basculement, lesdits aimants intérieurs présentent une dimension axiale inférieure à celle desdits aimants extérieurs.

L'invention permet d'envisager l'utilisation d'un capteur de position. Ainsi, avantageusement, une sonde magnétosensible est positionnée au voisinage du plan médian entre lesdites masses mobiles au-dessus desdites zones aimantées.

Lorsque l'écartement des aimants intérieurs est suffisant la sonde magnétosensible est positionnée au voisinage du plan médian entre lesdites masses mobiles à l'intérieur desdites zones aimantées.

Un autre objet de l'invention est de permettre la réalisation d'une solution industrielle pour maintenir des aimants parallélépipédiques dans un actionneur.

Un autre objet de l'invention est de proposer une solution industrielle pour l'intégration des aimants parallélépipédiques dans un corps de bobine.

Un autre objet de l'invention est de permettre une circulation de fluide (air, huile), à l'intérieur d'un actionneur linéaire présentant la configuration optimisée d'aimants permanents.

Ainsi, dans un mode de réalisation lesdits aimants de forme parallélépipédique sont maintenus par des supports présentant des feuillures dans lesquelles viennent se loger lesdits aimants.

Dans un mode de réalisation lesdits supports présentent des ouvertures extérieures situées au niveau desdits aimants.

Dans un mode de réalisation lesdits supports présentent des rainures axiales extérieures situées entre lesdits aimants.

Dans un mode de réalisation lesdits supports présentent des rainures intérieures.

Dans un mode de réalisation lesdits supports sont surmoulés par un corps de bobine maintenant en place lesdits aimants et lesdits supports.

Alternativement, ledit corps de bobine présente une poche centrale dans laquelle vient se loger une sonde de détection magnétosensible.

Alternativement, ledit corps de bobine présente des ouvertures longitudinales de circulation de fluide (air, huile).

Selon un mode particulier, l'actionneur comprend une chambre au-dessus des masses mobiles ainsi que des ouvertures supérieures dans un couvercle statorique du stator, lesdites ouvertures étant situées sur le haut de l'actionneur et permettant une circulation de fluide (air, huile) lors du fonctionnement dudit actionneur.

### BREVE DESCRIPTION DES FIGURES

D'autres caractéristiques et avantages de l'invention ressortiront à la lecture qui suit d'exemples de réalisation détaillés, en référence aux figures annexées qui représentent respectivement :
- la figure 1a, un ensemble de vues (dans le sens des aiguilles d'une montre depuis le coin supérieur gauche : en perspective, en perspective sans couvercle, en perspective sans corps de bobine ni bobine et isolée de dessus sur aimants et masses mobiles) d'un actionneur de l'état de l'art ;
- la figure 1b, des vues en coupe transversale respectivement, de gauche à droite, avec et sans corps de bobine ni bobine d'un actionneur de l'état de l'art ;
- la figure 2, une vue isolée de masses mobiles et d'aimants permanents selon l'invention dans un premier mode de réalisation ;
- la figure 3, une vue isolée de masses mobiles et d'aimants permanents selon l'invention dans un deuxième mode de réalisation ;
- la figure 4, un graphique montrant l'évolution du couple de basculement en fonction de la configuration d'aimants ;
- les figures 5 à 10, ainsi que la figure 12, des ensembles de vues (dans le sens des aiguilles d'une montre depuis le coin supérieur gauche : en perspective, en perspective sans couvercle, en perspective sans corps de bobine ni bobine et isolée de dessus sur aimants et masses mobiles) d'un actionneur selon plusieurs modes différents de réalisation des aimants ;
- la figure 11, un ensemble de vues (dans le sens des aiguilles d'une montre depuis le coin supérieur gauche : de côté sans couvercle, corps de bobine ni bobine, en perspective sans couvercle ni corps de bobine ni bobine, et isolée de dessus sur aimants et masses mobiles) d'un actionneur selon un mode de réalisation alternatif avec une sonde magnétosensible ;
- la figure 13, une vue éclatée d'un exemple de réalisation d'aimants parallélépipédiques avec leurs supports de maintien ;
- la figure 14, une vue isolée d'un exemple de deux ensembles d'aimants parallélépipédiques montés dans leur support de maintien ;
- la figure 15, une vue isolée des ensembles de la figure 14, surmoulés dans un corps de bobine avec la bobine montée et une sonde magnétosensible associée ;
- la figure 16, une vue de dessus de la figure 15 ;
- la figure 17, une vue en coupe longitudinale de la figure 15 sans bobine ;
- la figure 18, une vue en coupe longitudinale d'un exemple de réalisation d'un actionneur incorporant la configuration optimisée d'aimants permanents tels que définis par l'invention.

### DESCRIPTION DETAILLEE D'UN MODE DE REALISATION

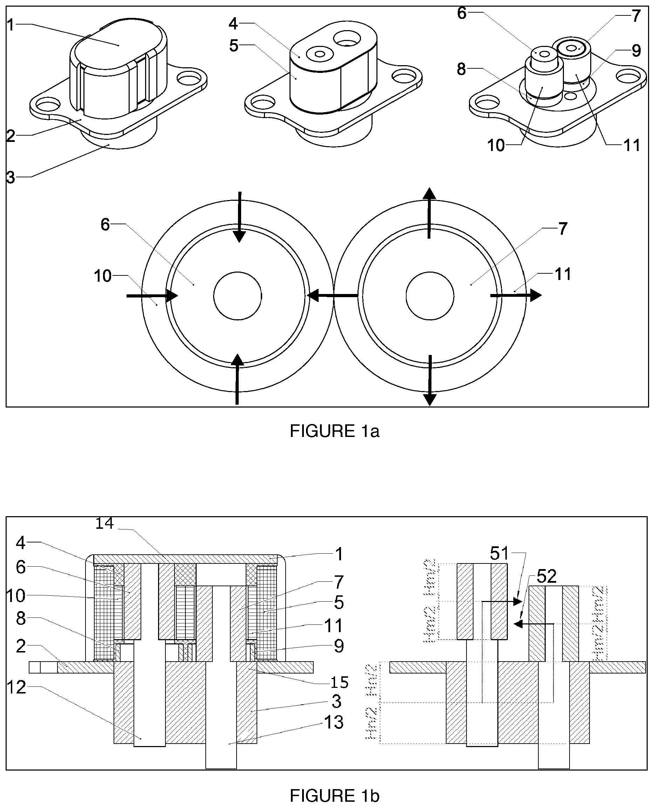

La figure 1a montre un actionneur linéaire selon l'art antérieur avec un stator formé d'un couvercle statorique (1), d'une base (2) et d'un nez de guidage (3). Cet actionneur est semblable, dans sa forme et sa fonctionnalité, à un actionneur tel que décrit dans le document WO2015114261. À l'intérieur du couvercle (1), se trouve une bobine (5) enroulée sur un corps de bobine (4). L'actionneur comprend deux pôles statoriques (14, 15) visualisés en figure 1b, qui coopèrent magnétiquement avec deux masses mobiles (6, 7). Ce corps de bobine (4) peut, selon les cas, porter deux cornes polaires (8) et (9), et deux aimants en forme de bagues complètes (10) et (11), liés respectivement aux masses mobiles (6) et (7). La direction d'aimantation est représentée par les flèches épaisses, orientées typiquement radialement par rapport aux masses mobiles (6, 7), l'une des bagues (10) présentant une direction d'aimantation radiale intérieure, l'autre bague (11) présentant une direction d'aimantation radiale extérieure.

Nous pouvons constater que, dans ce cas d'exemple, la zone centrale aimantée placée entre les mobiles (6) et (7) présente une épaisseur d'aimant double de celle dans les autres zones périphériques, la direction et le sens d'aimantation devenant concordants dans cette zone. Comme on peut le voir en figure 1b, à droite, les flèches noires indiquent la direction des forces (51) et (52) qui s'appliquent sur les masses mobiles, respectivement (6) et (7), dues au déséquilibre des volumes d'aimant (10) et (11). Ceci implique un couple qualifié de « parasite », induit par l'appui des poussoirs (12) et (13), solidaires des masses mobiles (6) et (7), dans le nez de guidage. Ce couple tire chaque mobile vers le centre de l'actionneur et implique une friction plus importante de chaque poussoir (12) et (13) dans le nez de guidage (3) et de ce fait, une dégradation des performances de l'actionneur. En présence de courant dans le bobinage (5) et au cours du déplacement des poussoirs (12) et (13), ce couple présente également une modulation d'amplitude.

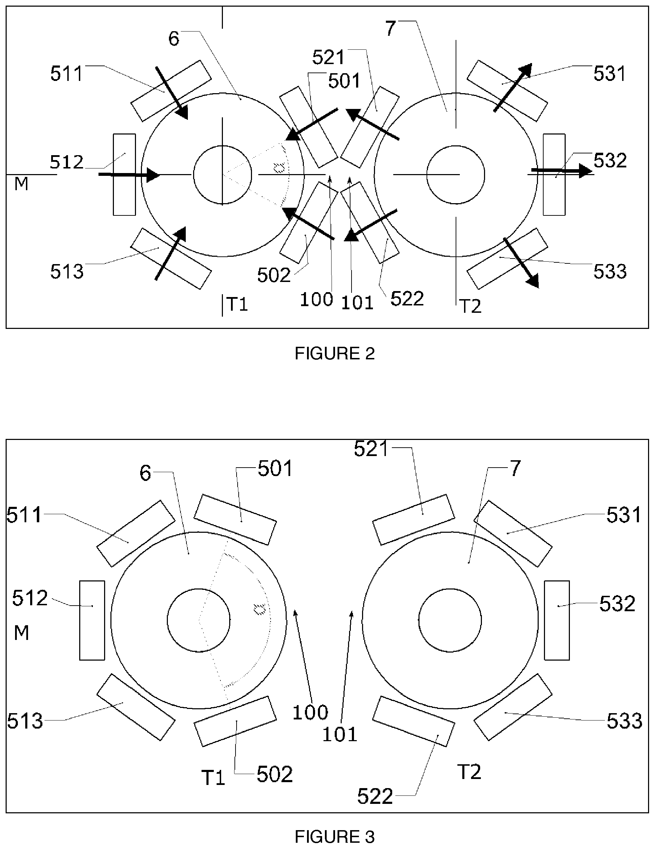

La figure 2 montre une première solution selon la présente invention avec dix aimants parallélépipédiques disposés de manière symétrique autour des mobiles (6) et (7). Nous introduisons les plans fictifs (M), (T1) et (T2). Le plan médian (M) passe par les axes de déplacement des masses mobiles (6) et (7), et les plans transversaux (T1) et (T2), parallèles entre eux et perpendiculaires audit plan médian (M) passent par le centre desdites masses mobiles (6) et (7). Les plans transversaux permettent de définir deux zones, une zone interne comprise entre les deux plans (T1) et (T2) et une zone externe qui englobe le reste du volume. Ces aimants, formant une enveloppe aimantée autour de chaque masse mobile (6, 7), peuvent être séparés selon deux groupes distincts fictifs :
- Les aimants intérieurs (501), (502), (521) et (522), compris dans la zone interne à l'intérieur des plans transversaux (T1) et (T2), qui sont écartés d'un angle α variable permettant de gérer l'amplitude du couple parasite sans trop dégrader la force axiale par rapport à un cas de référence où l'aimant occupe le plan médian (en figure 2, l'angle est de l'ordre de 70°). Les aimants intérieurs (501), (502), (521) et (522) sont positionnés de façon à ne pas occuper le plan médian (M) et s'écartent significativement de lui, chaque enveloppe aimantée définissant une zone non-aimantée (100, 101) orientée l'une vers l'autre et se situant donc dans la zone centrale entre les masses mobiles (6, 7).
- Les aimants extérieurs, (511), (512), (513), (531), (532) et (533), compris dans la zone externe à l'extérieur des plans transversaux (T1) et (T2), qui sont placés de manière à compenser le couple produit par les aimants intérieurs afin de minimiser le couple parasite.

Tous les aimants intérieurs (501), (502), (521), (522) et extérieurs (511), (512), (513), (531), (532), (533) participent à la création de la force axiale d'actionnement. Ils présentent une direction d'aimantation unidirectionnelle pour chacun reproduisant, lorsque considérés globalement, l'équivalent d'une direction d'aimantation radiale. Sur la figure 2, les flèches épaisses montrent cette direction d'aimantation. Pour les autres figures, la direction d'aimantation n'est pas montrée mais on retrouve toujours, pour l'enveloppe aimantée et quel que soit le mode de réalisation, une aimantation de type radiale ou unidirectionnelle dirigée vers ou à l'opposé de l'axe des masses mobiles (6, 7).

La figure 3 montre le même type de solution que celui de la figure 2, mais cette fois avec un angle α de valeur plus élevée, typiquement 160°. L'amplitude de l'angle α dépendra des caractéristiques physiques des aimants utilisés et des dimensions globales (diamètre et hauteur) des masses mobiles (6, 7), ainsi que de la limite acceptable dans l'application de cet actionneur. La limite acceptable est en grande partie définie par la qualité du guidage des masses mobiles (6, 7), de la force axiale que l'on souhaite générer, mais aussi des caractéristiques des différents aimants qui peuvent être tous du même type et de mêmes dimensions ou présenter des dimensions et grades différents. Dans certains cas, l'intégration d'une sonde magnétosensible au voisinage du plan médian entre les deux masses mobiles peut également influencer l'angle α. Cela sera décrit plus loin.

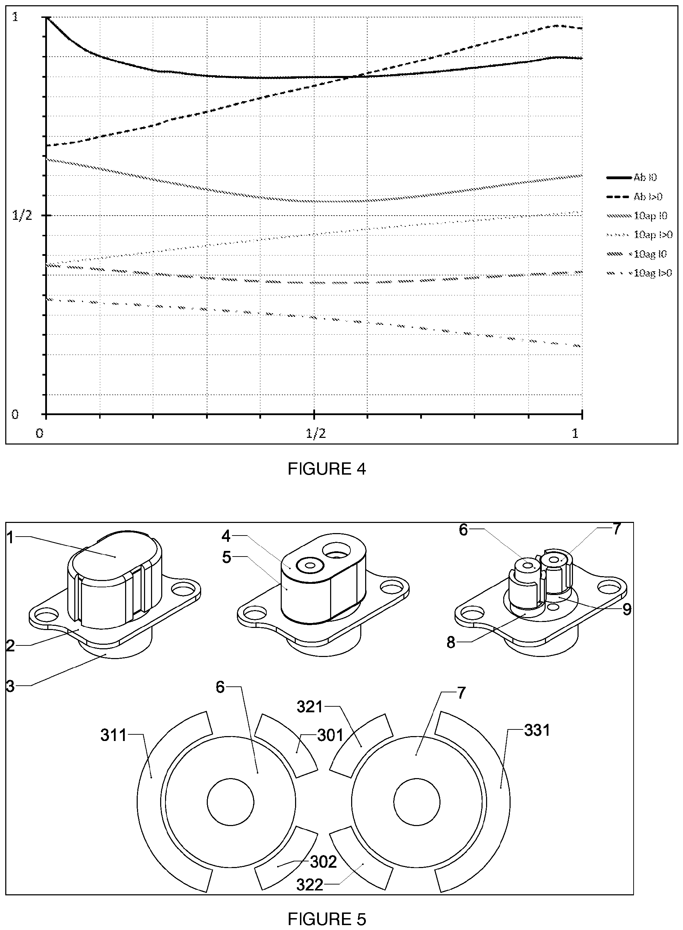

La figure 4 montre les résultats obtenus pour des structures répondant aux caractéristiques des 3 figures précédentes :

-La courbe (Ab I0) est relative à un actionneur de l'art antérieur de la figure 1, sans courant d'alimentation de la bobine de l'actionneur.
- La courbe (Ab I>0) est relative à un actionneur de l'art antérieur de la figure 1, avec courant d'alimentation de la bobine de l'actionneur.
- La courbe (10ap I0) est relative à un actionneur selon la figure 2, sans courant d'alimentation de la bobine de l'actionneur.
- La courbe (10ap I>0) est relative à un actionneur selon la figure 2, avec courant d'alimentation de la bobine de l'actionneur.
- La courbe (10ag I0) est relative à la configuration à un actionneur selon la figure 3, sans courant d'alimentation de la bobine de l'actionneur.
- La courbe (10ag I>0) est relative à la configuration à un actionneur selon la figure 3, avec courant d'alimentation de la bobine de l'actionneur.

Nous constatons qu'un angle α important permet de réduire le couple parasite de manière importante.

La figure 5 montre une solution utilisant six aimants en forme de tuile cylindrique circulaire avec des aimants extérieurs (311) et (331) présentant une largeur angulaire plus importante que celle des aimants intérieurs (301), (302), (321) et (322). Cette configuration peut être économique du point de vue du nombre de pièces en jeu.

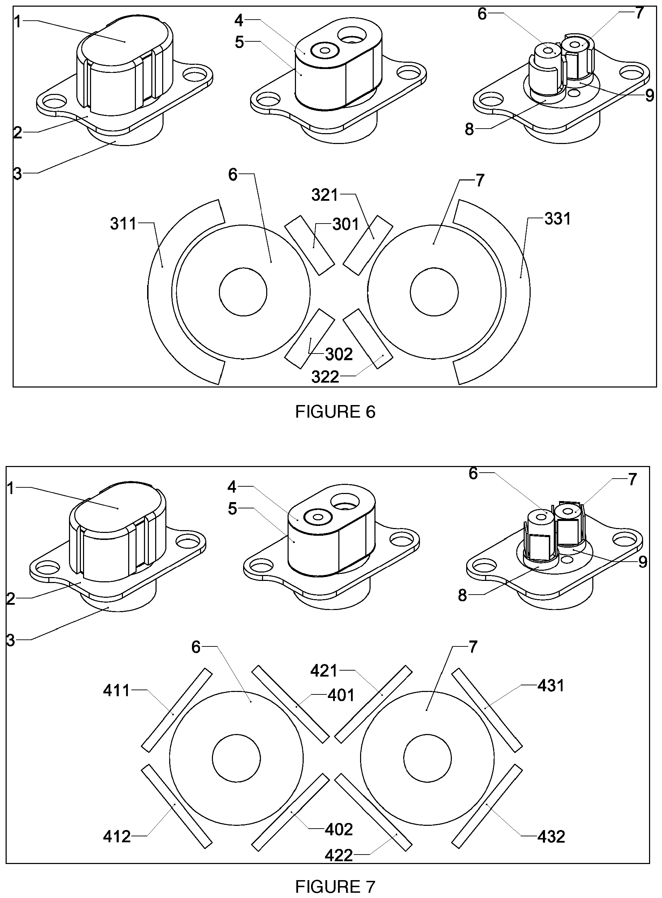

La figure 6 est une solution similaire à celle de la figure 5 pour ce qui est des aimants extérieurs, mais comprenant des aimants intérieurs (301, 302, 321, 322) de forme parallélépipédique. Le choix de la forme parallélépipédique ou en tuile des aimants intérieurs peut être dicté par des raisons de coût de réalisation. Généralement, les aimants de forme en tuile présenteront de meilleures performances, par l'optimisation du volume d'aimant et la diminution du jeu mécanique entre ces derniers et les masses mobiles (6) et (7). Ils sont par contre une solution généralement moins économique.

La figure 7 montre une structure à huit aimants : quatre aimants (401), (402), (421) et (422) dans la partie intérieure et quatre aimants (411), (412), (431) et (432) dans la partie extérieure de part et d'autre des masses mobiles (6, 7). Notons que les dimensions géométriques des aimants sont fonction des dimensions géométriques des mobiles (6) et (7). Le volume d'aimant n'est pas optimisé en vue des performances mais la réalisation ainsi présentée est économique.

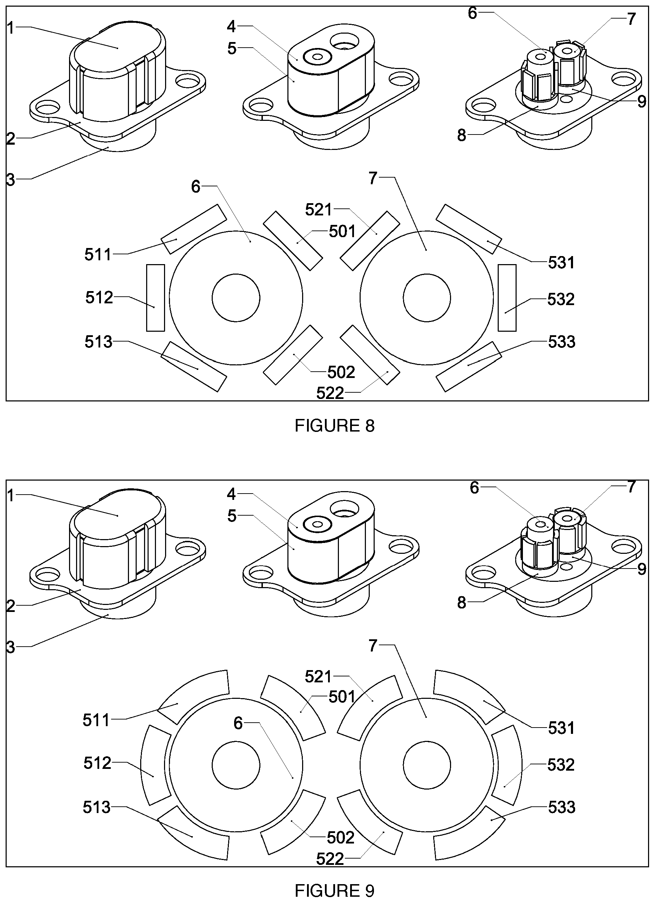

La figure 8 correspond à une structure présentant dix aimants parallélépipédiques, dans une version alternative à celles des figures 2 et 3. Cette configuration permet d'améliorer les performances par rapport à la configuration de la figure 7 au prix d'un nombre plus élevé d'aimants.

La figure 9 est similaire à la structure précédente, mais les aimants sont en forme de tuile, ou secteur angulaire. Cette solution est aussi à rapprocher de celle de la figure 5 mais avec des aimants tuile de même ouverture angulaire. La même forme d'aimant utilisée pour l'ensemble des aimants de la structure rend la solution plus économique, la forme en tuile permettant d'améliorer les performances globales de l'actionneur, par une augmentation de la force axiale.

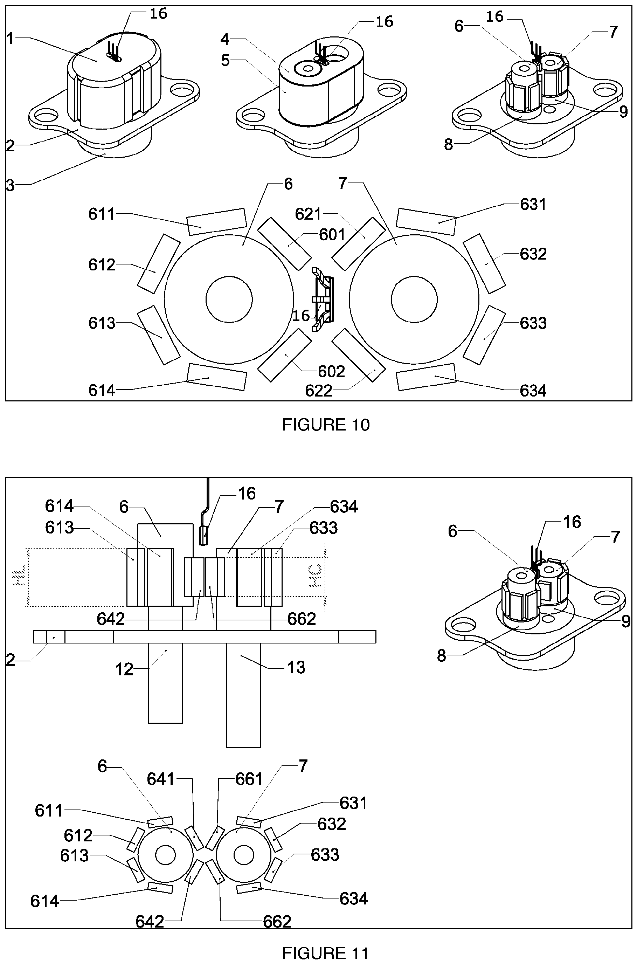

La figure 10 représente un actionneur avec douze aimants : quatre aimants centraux (601), (602), (621), et (622) et huit aimants extérieurs (611), (612), (613), (614), (631), (632), (633) et (634). La multiplicité des aimants permet de se rapprocher d'une configuration de type « bague » et de maximiser le volume d'aimants et donc les performances.

La figure 11 présente le cas où le couple parasite reste significatif et où l'angle α entre 2 aimants intérieurs est déjà important. Pour réduire le flux magnétique issu des aimants intérieurs, nous utilisons des aimants (641), (642), (661) et (662) de hauteur HC inférieure à la hauteur HL des aimants extérieurs (la hauteur étant considérée dans le sens longitudinal ou axial de déplacement). La minimisation de la hauteur HC permettra, selon les cas, de mieux compenser le couple parasite tout en conservant une force axiale suffisante.

Un des avantages de l'invention est aussi de faciliter l'intégration d'une sonde magnétosensible (16) au centre de la structure, comme présentée en figures 10 et 11. Cette sonde (16) sert à envoyer une information de position des masses mobiles (6, 7). Comme montrée en figure 10, l'absence d'aimants à proximité du plan médian (M) permet d'approcher la sonde (16) au cœur de la structure pour améliorer les performances de détection. L'alternative de la figure 11 permet d'améliorer encore ce positionnement de sonde (16) si d'aventure l'écartement entre les aimants n'était pas suffisant.

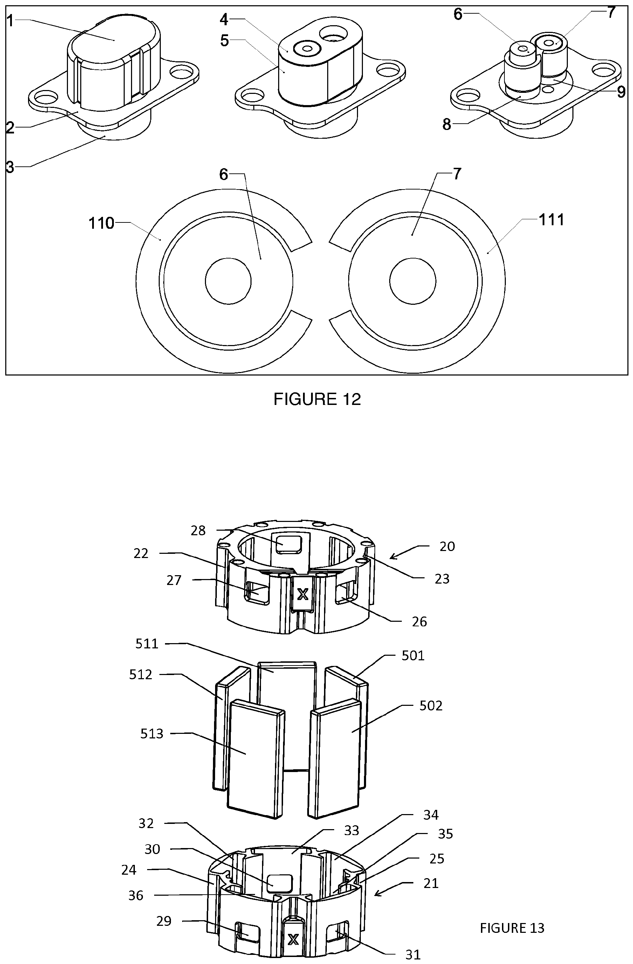

La figure 12 présente une alternative où chaque enveloppe aimantée est formée par des formes tubulaires d'aimants (110, 111) de moins de 360° permettant de minimiser le nombre d'aimants utilisés.

La figure 13 montre un exemple de montage des aimants parallélépipédiques (501, 502, 511, 512, 513) dans deux supports de maintien (20, 21) en forme de barillet. Ces supports (20, 21) sont typiquement réalisés en un matériau plastique thermodurcissable et présentent des rainures extérieures axiales (22 à 25) situées entre les aimants (501, 502, 511, 512, 513) une fois ces derniers assemblés, ainsi que des ouvertures (26 à 31) situées au niveau des aimants (501, 502, 511, 512, 513) une fois ces derniers assemblés. Les aimants (501, 502, 511, 512, 513) sont donc destinés à être maintenus par les deux supports (20, 21), la partie inférieure desdits aimants est maintenue par le support (21) et la partie supérieure desdits aimants est maintenue par le support (20).

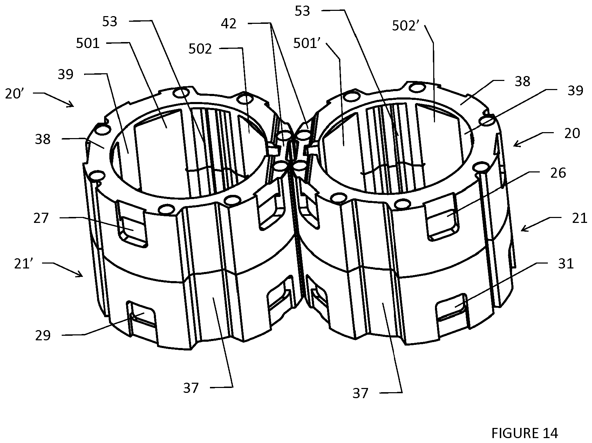

Les rainures axiales (22 à 25) servent d'une part à limiter la quantité de matière de ces supports (20, 21) mais aussi servent d'indexation de ces supports lors d'un montage dans un actionneur. Les diamètres intérieurs et extérieurs des supports (20, 21) sont identiques à ceux d'aimants bagues qui seraient utilisés si l'on ne choisissait pas d'aimants parallélépipèdes. Les aimants (501, 502, 511, 512, 513) sont insérés dans des feuillures (32 à 36) des supports (20, 21). Les rainures axiales (22 à 25) permettent de créer des renforts de surmoulage du corps de bobine et d'optimiser les épaisseurs de plastique pour favoriser l'injection. La géométrie intérieure qui combine le fait d'avoir des aimants prismes et des rainures intérieures (53), visibles en figure 14, permet de diminuer la surface de matière directement en vis-à-vis des masses mobiles et donc de réduire les effets de frottement visqueux avec le fluide (typiquement de l'huile lorsque l'actionneur auquel l'invention se destine fonctionne dans un environnement huileux). Les rainures axiales (22 à 25) favorisent la création de surfaces de positionnement (37) des supports (20, 21) qui permettent de garantir la localisation des aimants (501, 502, 511, 512, 513) dans l'actionneur.

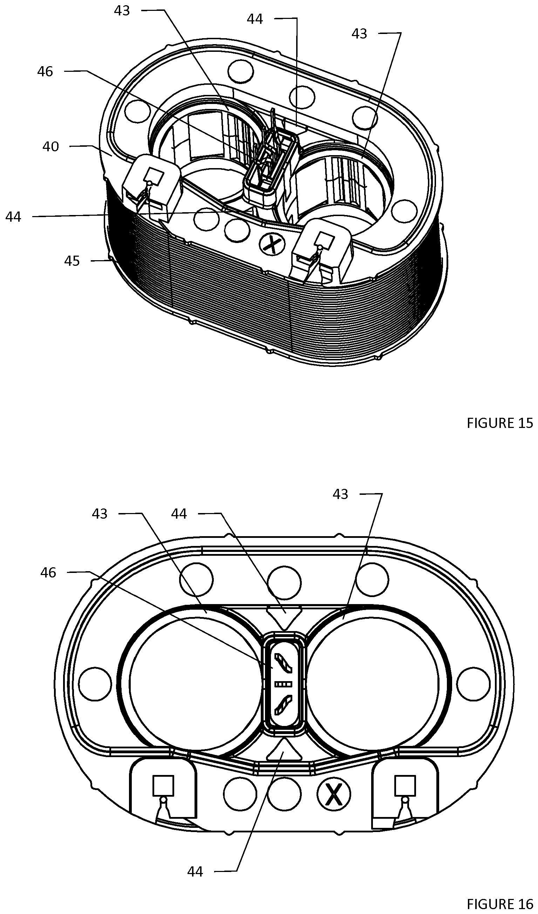

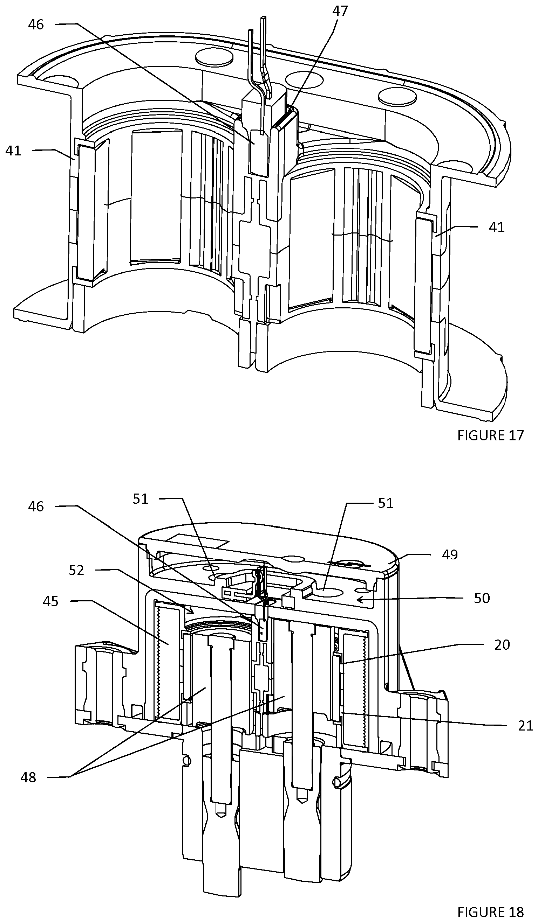

La figure 14 montre deux sous-ensembles formés chacun de deux supports (20, 21 et 20', 21') ainsi que de cinq aimants, deux étant ici visibles pour chaque (501, 502 et 501', 502'), montés à l'intérieur de ces supports (20, 21 et 20', 21'). Les aimants sont maintenus par deux retours supérieurs (38) et inférieurs (non montrés) ce qui permet de les encapsuler. Les retours (38) maintiennent les ailettes plastiques verticales (39) et évitent leur déformation sous charge. La réalisation en deux supports (20, 21) plutôt que un seul présente l'avantage d'une hauteur réduite qui facilite l'injection des ailettes plastiques verticales (39) avec une déformation plus faible et une meilleure gestion des dépouilles de démoulage. Les rainures axiales (22 à 25) permettent d'optimiser les épaisseurs de plastique pour favoriser l'injection et permettent au surmoulage du corps de bobine (40), visible en figure 15, de créer des colonnes de renfort (41), visibles en figure 17, sur la périphérie des supports (20, 21) afin de les protéger de la déformation sous charge lors de sa réalisation. Les rainures axiales (22 à 25) de forme ouvertes peuvent également se refermer pour créer une accroche sur le surmoulage. Une nervure de positionnement (42) permet d'orienter les supports (20, 21) lors du surmoulage. Les ouvertures (26 à 31) permettent au plastique de surmoulage du corps de bobine (40) de venir en contact avec les aimants afin de les fixer en position. Leurs tailles réduites n'ont pas d'effet de démagnétisation sur les aimants. Le moule de surmoulage du corps de bobine (40) ferme de manière étanche sur des zones d'appui (43) en partie haute et basse des supports (20, 21) et empêche le plastique de s'infiltrer sur les surfaces intérieures des aimants. Le corps de bobine (40) surmoulé intègre les ouvertures de circulation de fluide (44) qui permettent d'améliorer l'actionnement à froid et évite des effets de ventouse.

Dans le cas d'un design avec aimants de faible longueur, relativement à la longueur de l'actionneur, ces aimants peuvent être directement insérés dans le corps de bobine sans l'intermédiaire des supports (20, 21). Dans ce cas non illustré, le plastique du surmoulage stator permet de maintenir les aimants en position.

Le corps de bobine (40) porte une bobine (45), généralement en fils de cuivre bobinés sur le corps (40), servant à commander le déplacement des organes mobiles (48) de l'actionneur, visibles en figure 18. Le corps de bobine (40) sert aussi au positionnement d'une sonde magnétosensible (46) située, transversalement, entre les deux sous-ensembles supports/aimants, à l'intérieur d'une poche (47) formée par le corps de bobine (40) lors de son moulage. Cette sonde magnétosensible (46) permet de détecter la position haute ou basse des organes mobiles (48) de l'actionneur grâce à la modulation du flux magnétique permise par ces derniers en interaction avec les aimants (501, 502, 511, 512, 513).

Comme montré en figure 18 où un actionneur utilisant la présente invention est montré, le capot (49) de l'actionneur délimite une chambre (50), sur le haut de l'actionneur. Cette chambre (50) permet notamment la circulation de fluide éventuellement présente dans l'actionneur durant le fonctionnement par la présence d'ouvertures supérieures (51) situées dans le couvercle statorique (1) Ces ouvertures supérieures (51) permettent la communication de fluide entre cette chambre (50) et les chambres (52) à l'intérieur desquelles se déplacent les organes mobiles (48). En interaction avec les ouvertures (44) ces ouvertures supérieures (51) permettent une circulation continue de l'huile et l'air et évite un phénomène de ventouse, celui-ci étant particulièrement marqué à froid (température sous 0°C). L'actionnement est ainsi favorisé et la circulation de fluide permet d'éviter un blocage ou un actionnement retardé ou ralenti des masses mobiles.

## Revendications

1. - Actionneur électromagnétique linéaire comportant un stator, au moins une bobine (5) électrique et deux pôles statoriques (14, 15) ferromagnétiques situés, axialement, de part et d'autre de la bobine (5) ainsi que deux masses mobiles (6, 7) indépendantes se déplaçant selon des axes parallèles entre lesdits pôles statoriques (14, 15) à l'intérieur de ladite bobine (5), chacune desdites masses mobiles (6,7) étant formée d'un matériau ferromagnétique, lesdites masses mobiles (6, 7) étant entourées, chacune, par une enveloppe aimantée fixe constituée par au moins un aimant permanent, **caractérisé en ce que** ladite enveloppe aimantée s'étend sur un secteur tubulaire de moins de 360°, chacune des desdites enveloppes définissant une zone non-aimantée (100) dirigée vers la zone non-aimantée (101) de l'autre enveloppe, lesdites zones non aimantées (100, 101) étant symétriques par rapport au plan médian (M) passant par lesdits axes parallèles.

2. - Actionneur électromagnétique linéaire selon la revendication 1 **caractérisé en ce que** lesdites enveloppes aimantées sont formées par des aimants de forme parallélépipédique.

3. - Actionneur électromagnétique linéaire selon la revendication 1 **caractérisé en ce que** lesdites enveloppes aimantées sont formées par des aimants en forme de tuile cylindrique circulaire.

4. - Actionneur électromagnétique linéaire selon la revendication 1 **caractérisé en ce que** lesdites masses mobiles (6, 7) définissent deux plans transverses (T1, T2) parallèles entre eux, perpendiculaires audit plan médian (M) et passant par le centre desdites masses mobiles (6,7) et **en ce que** chaque enveloppe aimantée comprend des aimants intérieurs (501), (502), (521) et (522), situés entre lesdits deux plans transverses (T1, T2), et des aimants extérieurs (511, 513, 531, 533), situés à l'extérieur desdits plans transverses (T1, T2).

5. - Actionneur électromagnétique linéaire selon la revendication 4 **caractérisé en ce que** lesdites enveloppes aimantées présentent, entre les plans transverses (T1, T2), des aimants de forme parallélépipédique et en dehors desdits plans transverses (T1, T2), des aimants en forme de tuile cylindrique circulaire.

6. - Actionneur électromagnétique linéaire selon la revendication 4 **caractérisé en ce que** lesdites enveloppes aimantées présentent, entre les plans transverses (T1, T2), des aimants en forme de tuile cylindrique circulaire et en dehors desdits plans transverses (T1, T2), des aimants de forme parallélépipédique.

7. - Actionneur électromagnétique linéaire selon la revendication 4 **caractérisé en ce que** lesdits aimants intérieurs (501), (502), (521) et (522) et extérieurs (511, 513, 531, 533) sont identiques.

8. - Actionneur électromagnétique linéaire selon la revendication 4 **caractérisé en ce que** ledit plan médian (M) est un plan de symétrie pour lesdits aimants intérieurs (501), (502), (521) et (522) et extérieurs (511, 513, 531, 533).

9. - Actionneur électromagnétique linéaire selon la revendication 4 **caractérisé en ce que** lesdits aimants intérieurs (501), (502), (521) et (522) présentent une dimension axiale inférieure à celle desdits aimants extérieurs (511, 513, 531, 533).

10. - Actionneur électromagnétique linéaire selon la revendication 1 **caractérisé en ce qu'**une sonde magnétosensible (16) est positionnée au voisinage du plan médian (M) entre lesdites masses mobiles (6, 7) au-dessus desdites zones aimantées.

11. - Actionneur électromagnétique linéaire selon la revendication 1 **caractérisé en ce qu'**une sonde magnétosensible (16) est positionnée au voisinage du plan médian (M) entre lesdites masses mobiles (6, 7) et à l'intérieur desdites zones aimantées.

12. - Actionneur électromagnétique linéaire selon la revendication 2 **caractérisé en ce que** lesdits aimants de forme parallélépipédique sont maintenus par des supports (20, 21) présentant des feuillures (30 à 33) dans lesquelles viennent se loger lesdits aimants.

13. - Actionneur électromagnétique linéaire selon la revendication 12 **caractérisé en ce que** lesdits supports (20, 21) présentent des ouvertures extérieures (26 à 31) situées au niveau desdits aimants.

14. - Actionneur électromagnétique linéaire selon la revendication 12 **caractérisé en ce que** lesdits supports (20, 21) présentent des rainures axiales extérieures (22 à 25) situées entre lesdits aimants.

15. - Actionneur électromagnétique linéaire selon la revendication 12 **caractérisé en ce que** lesdits supports (20, 21) présentent des rainures intérieures (53).

16. - Actionneur électromagnétique linéaire selon la revendication 12 **caractérisé en ce que** lesdits supports (20, 21) sont surmoulés par un corps de bobine (40) maintenant en place lesdits aimants et lesdits supports.

17. - Actionneur électromagnétique linéaire selon la revendication 16 **caractérisé en ce que** ledit corps de bobine (40) présente une poche (47) centrale dans laquelle vient se loger une sonde de détection magnétosensible.

18. - Actionneur électromagnétique linéaire selon la revendication 16 **caractérisé en ce que** ledit corps de bobine (40) présente des ouvertures longitudinales de circulation de fluide (44).

19. - Actionneur électromagnétique linéaire selon l'une des revendications précédentes **caractérisé en ce qu'**il comprend une chambre (50) au-dessus desdites masses mobiles (6, 7) ainsi que des ouvertures supérieures (51) dans un couvercle statorique (1) du stator, ces ouvertures (51) étant situées sur le haut de l'actionneur et permettant une circulation de fluide lors du fonctionnement dudit actionneur.

## Patentansprüche

1. Linearer elektromagnetischer Aktuator, der einen Stator, wenigstens eine elektrische Spule (5) und zwei ferromagnetische Statorpole (14, 15), die axial zu beiden Seiten der Spule (5) gelegen sind, sowie zwei unabhängige bewegbare Massen (6, 7) aufweist, die sich entlang von parallelen Achsen zwischen den Statorpolen (14, 15) innerhalb der Spule (5) bewegen, wobei jede der bewegbaren Massen (6, 7) aus einem ferromagnetischen Material ausgebildet ist, wobei jede der bewegbaren Massen (6, 7) durch ein feststehendes Magnetgehäuse umgeben ist, das aus wenigstens einem Permanentmagneten besteht, **dadurch gekennzeichnet, dass** sich das Magnetgehäuse über einen röhrenförmigen Abschnitt von weniger als 360° erstreckt, wobei jedes der Gehäuse einen nicht magnetisierten Bereich (100) definiert, der auf den nicht magnetisierten Bereich (101) des anderen Gehäuses gerichtet ist, wobei die nicht magnetisierten Bereiche (100, 101) in Bezug auf die Mittelebene (M) symmetrisch sind, die durch die parallelen Achsen verläuft.

2. Linearer elektromagnetischer Aktuator nach Anspruch 1, **dadurch gekennzeichnet, dass** die Magnetgehäuse durch quaderförmige Magnete ausgebildet sind.

3. Linearer elektromagnetischer Aktuator nach Anspruch 1, **dadurch gekennzeichnet, dass** die Magnetgehäuse durch ziegelförmige, kreiszylindrische Magnete ausgebildet sind.

4. Linearer elektromagnetischer Aktuator nach Anspruch 1, **dadurch gekennzeichnet, dass** die bewegbaren Massen (6, 7) zwei Querebenen (T1, T2) definieren, die parallel zueinander sind, senkrecht zu der Mittelebene (M) sind und durch die Mitte der bewegbaren Massen (6, 7) verlaufen, und dass jedes Magnetgehäuse innere Magnete (501), (502), (521) und (522), die zwischen den zwei Querebenen (T1, T2) gelegen sind, und äußere Magnete (511, 513, 531, 533) umfasst, die außerhalb der Querebenen (T1, T2) gelegen sind.

5. Linearer elektromagnetischer Aktuator nach Anspruch 4, **dadurch gekennzeichnet, dass** die Magnetgehäuse zwischen den Querebenen (T1, T2) quaderförmige Magnete und außerhalb der Querebenen (T1, T2) ziegelförmige, kreiszylindrische Magnete vorweisen.

6. Linearer elektromagnetischer Aktuator nach Anspruch 4, **dadurch gekennzeichnet, dass** die Magnetgehäuse zwischen den Querebenen (T1, T2) ziegelförmige, kreiszylindrische Magnete und außerhalb der Querebenen (T1, T2) quaderförmige Magnete vorweisen.

7. Linearer elektromagnetischer Aktuator nach Anspruch 4, **dadurch gekennzeichnet, dass** die inneren (501), (502), (521) und (522) und die äußeren Magnete (511, 513, 531, 533) identisch sind.

8. Linearer elektromagnetischer Aktuator nach Anspruch 4, **dadurch gekennzeichnet, dass** die Mittelebene (M) eine Symmetrieebene für die inneren (501), (502), (521) und (522) und die äußeren Magnete (511, 513, 531, 533) ist.

9. Linearer elektromagnetischer Aktuator nach Anspruch 4, **dadurch gekennzeichnet, dass** die inneren Magnete (501), (502), (521) und (522) eine kleinere axiale Abmessung als die der äußeren Magnete (511, 513, 531, 533) vorweisen.

10. Linearer elektromagnetischer Aktuator nach Anspruch 1, **dadurch gekennzeichnet, dass** eine magnetisch beeinflussbare Sonde (16) in der Nähe der Mittelebene (M) zwischen den bewegbaren Massen (6, 7) über den magnetisierten Bereichen positioniert ist.

11. Linearer elektromagnetischer Aktuator nach Anspruch 1, **dadurch gekennzeichnet, dass** eine magnetisch beeinflussbare Sonde (16) in der Nähe der Mittelebene (M) zwischen den bewegbaren Massen (6, 7) und innerhalb der magnetisierten Bereiche positioniert ist.

12. Linearer elektromagnetischer Aktuator nach Anspruch 2, **dadurch gekennzeichnet, dass** die quaderförmigen Magnete durch Träger (20, 21) gehalten werden, die Falze (30 bis 33) vorweisen, in denen die Magnete untergebracht sind.

13. Linearer elektromagnetischer Aktuator nach Anspruch 12, **dadurch gekennzeichnet, dass** die Träger (20, 21) äußere Öffnungen (26 bis 31) vorweisen, die an den Magneten gelegen sind.

14. Linearer elektromagnetischer Aktuator nach Anspruch 12, **dadurch gekennzeichnet, dass** die Träger (20, 21) äußere axiale Nuten (22 bis 25) vorweisen, die zwischen den Magneten gelegen sind.

15. Linearer elektromagnetischer Aktuator nach Anspruch 12, **dadurch gekennzeichnet, dass** die Träger (20, 21) innere Nuten (53) vorweisen.

16. Linearer elektromagnetischer Aktuator nach Anspruch 12, **dadurch gekennzeichnet, dass** die Träger (20, 21) durch einen Spulenkörper (40) umgeben sind, der die Magnete und die Träger an Ort und Stelle hält.

17. Linearer elektromagnetischer Aktuator nach Anspruch 16, **dadurch gekennzeichnet, dass** der Spulenkörper (40) ein zentrales Fach (47) vorweist, in dem eine magnetisch beeinflussbare Nachweissonde untergebracht ist.

18. Linearer elektromagnetischer Aktuator nach Anspruch 16, **dadurch gekennzeichnet, dass** der Spulenkörper (40) längliche Öffnungen für Fluidzirkulation (44) vorweist.

19. Linearer elektromagnetischer Aktuator nach einem der vorhergehenden Ansprüche, **dadurch gekennzeichnet, dass** er eine Kammer (50) über den bewegbaren Massen (6, 7) sowie obere Öffnungen (51) in einer Statorabdeckung (1) des Stators umfasst, wobei diese Öffnungen (51) auf der Oberseite des Aktuators gelegen sind und eine Fluidzirkulation während des Betriebs des Aktuators ermöglichen.

## Claims

1. Linear electromagnetic actuator comprising a stator, at least one electric coil (5) and two ferromagnetic stator poles (14, 15) located axially on either side of the coil (5), as well as two independent mobile masses (6, 7) which move along parallel axes between said stator poles (14, 15) inside said coil (5), each of said mobile masses (6, 7) being made of a ferromagnetic material, said mobile masses (6, 7) each being surrounded by a fixed magnetic casing consisting of at least one permanent magnet, **characterized in that** said magnetic casing extends over a tubular sector of less than 360°, each of said casings defining a non-magnetic region (100) directed toward the non-magnetic region (101) of the other casing, said non-magnetic regions (100, 101) being symmetrical with respect to the median plane (M) passing through said parallel axes.

2. Linear electromagnetic actuator according to claim 1, **characterized in that** said magnetic casings are formed by parallelepiped magnets.

3. Linear electromagnetic actuator according to claim 1, **characterized in that** said magnetic casings are formed by magnets in the form of a circular cylindrical tile.

4. Linear electromagnetic actuator according to claim 1, **characterized in that** said mobile masses (6, 7) define two transverse planes (T1, T2) which are parallel to one another and perpendicular to said median plane (M), and which pass through the center of said mobile masses (6, 7), and **in that** each magnetic casing comprises internal magnets (501), (502), (521) and (522) that are located between said two transverse planes (T1, T2) and external magnets (511, 513, 531, 533) that are located outside said transverse planes (T1, T2).

5. Linear electromagnetic actuator according to claim 4, **characterized in that** said magnetic casings have parallelepiped magnets between the transverse planes (T1, T2) and magnets in the form of a circular cylindrical tile outside said transverse planes (T1, T2).

6. Linear electromagnetic actuator according to claim 4, **characterized in that** said magnetic casings have magnets in the form of a circular cylindrical tile between the transverse planes (T1, T2) and parallelepiped magnets outside said transverse planes (T1, T2).

7. Linear electromagnetic actuator according to claim 4, **characterized in that** said internal magnets (501), (502), (521) and (522) and external magnets (511, 513, 531, 533) are identical.

8. Linear electromagnetic actuator according to claim 4, **characterized in that** said median plane (M) is a plane of symmetry for said internal magnets (501), (502), (521) and (522) and external magnets (511, 513, 531, 533).

9. Linear electromagnetic actuator according to claim 4, **characterized in that** said internal magnets (501), (502), (521) and (522) have an axial dimension which is smaller than that of said external magnets (511, 513, 531, 533).

10. Linear electromagnetic actuator according to claim 1, **characterized in that** a magnetosensitive probe (16) is positioned in the vicinity of the median plane (M) between said mobile masses (6, 7) above said magnetic regions.

11. Linear electromagnetic actuator according to claim 1, **characterized in that** a magnetosensitive probe (16) is positioned in the vicinity of the median plane (M) between said mobile masses (6, 7) and inside said magnetic regions.

12. Linear electromagnetic actuator according to claim 2, **characterized in that** said parallelepiped magnets are held by supports (20, 21) which have rabbets (30 to 33) in which said magnets are housed.

13. Linear electromagnetic actuator according to claim 12, **characterized in that** said supports (20, 21) have external openings (26 to 31) located at said magnets.

14. Linear electromagnetic actuator according to claim 12, **characterized in that** said supports (20, 21) have external axial grooves (22 to 25) located between said magnets.

15. Linear electromagnetic actuator according to claim 12, **characterized in that** said supports (20, 21) have internal grooves (53).

16. Linear electromagnetic actuator according to claim 12, **characterized in that** said supports (20, 21) are overmolded by a coil body (40) which holds said magnets and said supports in place.

17. Linear electromagnetic actuator according to claim 16, **characterized in that** said coil body (40) has a central pocket (47) in which a magnetosensitive detection probe is housed.

18. Linear electromagnetic actuator according to claim 16, **characterized in that** said coil body (40) has longitudinal fluid flow openings (44).

19. Linear electromagnetic actuator according to any of the preceding claims, **characterized in that** it comprises a chamber (50) above said mobile masses (6, 7) as well as upper openings (51) in a stator cover (1) of the stator, these openings (51) being located on the top of the actuator and allowing fluid to flow when said actuator is in operation.
